# EUROPEAN PATENT SPECIFICATION

(11) **EP 2 662 501 B1**
(45) Date of publication and mention of the grant of the patent: **12.06.2019**
(21) Application number: 13388004.7
(22) Date of filing: 23.04.2013
(51) Int. Cl.: E03B 7/07

(54) **A method and a system for leak protection of a supply water installation**
Verfahren und System zum Leckageschutz einer Wasserversorgungsanlage
Procédé et système pour une protection contre les fuites d'une installation d'eau d'alimentation

(30) Priority: 08.05.2012 DK 201200314
(43) Date of publication of application: 13.11.2013
(73) Proprietor: Dantaet A/S, 5250 Odense SV (DK)
(72) Inventor: Garnaes, Svend, 5250 Odense SV (DK)
(74) Representative: Larsen, Hans Ole

(56) References cited:
- WO-A1-2010/098671
- WO-A2-2008/020407
- DE-B3-102009 045 150
- DE-U1- 29 611 260
- FR-A1- 2 661 971
- US-A1- 2003 192 600

## Description

### The prior art

The invention relates to a method for leak monitoring and protection in a supply water installation by monitoring the water consumption, wherein the water conduit is provided with a signal-emitting flow meter and a controlled shutoff valve, both of which are connected with a control box, according to the preamble of claim 1.

Such methods and leak protection systems are widely used, since serious damage to buildings may occur, if a leak in the water installation is not detected rapidly, and the water is shut off.

Ordinary protection systems are provided with a control box which is in signal connection with a water meter, so that the water consumption may be monitored currently. Such a water meter may be a mechanical flow meter with a signal annunciator or an electronic flow meter.

Various systems for such leak protections are known.

US 2003 192600 discloses a system in which a form of flow interrupter is incorporated, and where an alarm is initiated after a predetermined period of time.

The extent of a leak thus depends on how fast and thereby how much water escapes at a leak, and is not a question of water volume. Thus, the system does not allow for the degree of the leak.

Another system is known from US 5,347,264, in which a shutoff valve on the water conduit is in signal connection with movement sensors. This system however, is vitiated by the drawback that as long as a movement sensor is activated by individuals in the building, there will be no leak protection of the installation, since the valve is constantly open, and, thus, no form of measurement takes place. Only when the movement sensor has registered depopulation for a certain time, will the system close the valve and detect a leak, if any, by means of a pressostat.

### The object of the invention

It is the object of the method according to the invention to improve the level of protection in a building through the use of signals from one or more movement sensors, to adapt the sensitivity of the leak monitoring to the actual use of the building, as well as, where fire alarm boxes or hose reels connected to the ordinary supply water installation are present in the installation, to force the opening of the shutoff valve according to the same movement signals, so that closing is not possible irrespective of conflicting control signals. It is ensured thereby that the fire fighting means, as required by the Building Regulations, are under the necessary operating pressure when the building is populated.

This is achieved according to the invention by a method according to claim 1 in which a control box, when receiving a signal from one or more movement sensors, will signal the shutoff valve to open the water supply to the installation, when individuals are thus present in the building.

This changes the system from being a leak protection system to a monitoring system, when individuals are registered in the building, which means that the system satisfies the requirements of fire fighting, it being ensured that there is water for fire fighting.

This means that hose reels, fire alarm boxes will be under water pressure, when this is required, notwithstanding that the supply water installation is under control of a leak protection system.

When a movement sensor is disposed in the vicinity of fire alarm boxes, the movement sensor will reveal that individuals are present in the building, even though the leak protection system is activated.

The control box is in signal connection with remote alarm annunciators and ensures, that in those periods where population of the building renders closing of the shutoff valve impossible through signals from the movement sensors, an alarm of a leak in the installation will be communicated to the person in charge or to supervising staff, who, at their discretion, may interfere to shut off the leak under safe conditions.

The control box is constructed such that monitoring takes place in two phases with their respective sensitivities, depending on whether the building is populated or depopulated, the best possible leak protection is achieved, it being moreover made possible to use the system in installations with fire alarm boxes or hose reels through forced opening of the valve when the building is populated.

Movement sensors control these two functions of the control box.

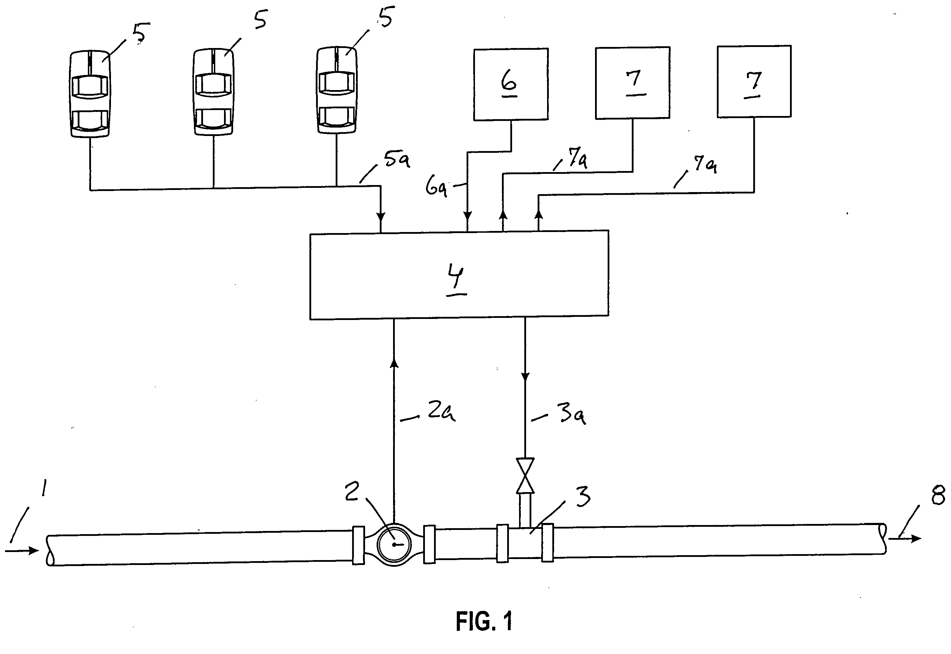

### The drawing

An example of a system for performing the method according to the invention will be described more fully below with reference to the drawing, which shows a basic diagram of a system mounted in a building.

### Description of an explanatory embodiment

The drawing shows an example of an installation in a building in which leak protection is desired, it being simultaneously desired to ensure that the system automatically switches to a monitoring system when individuals are present in the building.

Hereby, a dual function is achieved, depending on whether water pressure for fire fighting is needed.

The drawing, at the bottom, shows the supply pipe for pressure water, supply water, which is supplied, as indicated by the arrow 1. A water meter 2 is mounted on the pipe, said water meter registering, measuring, the water flow through the pipe.

Moreover, a shutoff valve 3 is mounted, which controls the supply of water 8 to the supply water installation present in the building through a signal 3a from a control box 4.

The control box 4 is in signal connection 5a with a plurality of movement sensors 5, which are mounted at selected places, e.g. in the vicinity of fire alarm boxes, extinguishing equipment and at access paths to tapping points in general. The purpose of these sensors 5 is to apply a signal 5a to the control box 4 when movement is registered, that is when individuals are present in the building.

Further, there is a signal connection 6a to an automatic fire alarm 6, which, in case of fire, will register it and apply a signal 6a to the control box 4, which, influenced by this, will likewise force the shutoff valve 3 to open.
Finally, two boxes 7 are shown, which indicate remote alarm annunciators, so that an alarm is applied to the person in charge/supervising person at a leak from the supply water installation.

Then, the method, i.e. the function, will be described.

The control box 4 has two functions, phases, viz. monitoring of populated and depopulated building, respectively.

Each of these two phases has its own monitoring and alarm threshold, so that the safety level as well as the practical aspect may be optimized

The signal 5a from the movement sensors 5 to the control box 4 controls this by switching the consumption phases in the building.

When the water consumption thresholds fixed for the phase concerned are exceeded, the control box 4 will apply an alarm signal 7a to the remote alarm annunciator 7.

If the control box 4 is in the phase of depopulated building, and if no signal 6a arrives from the fire alarm 6, the control box 4 will apply a signal 3a to the valve 3 for shutting off the water supply 8.

If the control box 4 then receives a signal 5a from the movement sensors 5 or a signal 6a from the fire alarm 6, a signal 3a will immediately be applied for the opening of the valve 3 with a view to water pressure to the installation.

The movement sensors 5 are preferably arranged at the access paths to tapping points of the supply water installations, and it is expedient to arrange a sensor 5 in front of each fire alarm box, hose reel. This ensures that these fire fighting installations, which are connected with the supply water installation, will always be under water pressure, even though the supply water installation is protected by the leak system.

By means of this system and the method, the leak protection system according to the invention will automatically exhibit the best possible protection degree, and the requirements of the authorities are met at the same time.

## Claims

1. A method of monitoring the water consumption and/or leakage in a supply water installation, wherein the water conduit is provided with a water meter (2) and a shutoff valve (3), both of which are in signal connection with a control box, whereby the control box (4) is in signal connection (7a) with one or more remote alarm annunciators (7), so that when the control box (4) is in a phase, corresponding to depopulated building, and no signal (6a) is applied from a fire alarm (6), the box (4) applies a signal (3a) to the valve (3) to shut off the water supply (8),
and when the control box (4) is in its second phase, corresponding to populated building, and a signal (5a) from one or more movement sensors (5) and/or a signal (6a) from the fire alarm (6) is applied, the box (4) applies a signal (3a) to the valve (3) to open the water supply (8) to the building, **characterised in that** in the second phase if the control box (4) at a signal (2a) from the water meter (2) registers a leak, it applies a signal (7a) to remote alarm annunciators (7), and an alarm message is sent to the person in charge or supervising person, said shutoff valve (3) being forcibly open, for which reason the control box (4) cannot shut off the water supply (8).

## Patentansprüche

1. Verfahren zum Überwachen des Wasserverbrauchs und/oder der Wasserleckage in einem Wasserversorgungssystem, wobei die Wasserleitung mit einem Wasserzähler (2) und einem Absperrventil (3) bereitgestellt wird, die jeweils in Signalverbindung mit einem Steuerkasten sind, wobei der Steuerkasten (4) derart in Signalverbindung (7a) mit einem oder mehreren entfernten Alarmgebern (7) ist, dass wenn der Steuerkasten (4) sich in einer Phase, einem unbewohnten Gebäude zugeordnet zu sein, befindet und kein Signal (6a) von einem Feueralarm (6) anliegt, der Kasten (4) ein Signal (3a) an das Ventil (3) anlegt, um die Wasserversorgung (8)abzustellen,
und wenn der Steuerkasten (4) sich in seiner zweiten Phase, einem bewohnten Gebäude zugeordnet zu sein, befindet und ein Signal (5a) von einem oder mehreren Bewegungssensoren (5) und/oder ein Signal (6a) von dem Feueralarm (6) anliegt, der Kasten (4) ein Signal (3a) an das Ventil (3) anlegt, um die Wasserversorgung (8) zu dem Gebäude zu öffnen, **dadurch gekennzeichnet, dass** falls in der zweiten Phase der Steuerkasten (4) bei einem Signal (2a) des Wasserzählers (2) eine Leckage registriert, er ein Signal (7a) an die entfernten Alarmgeber (7) anlegt, und eine Alarmmeldung an die verantwortliche oder beaufsichtigende Person gesendet wird, wobei das Absperrventil (3) zwangsweise geöffnet ist, weshalb der Steuerkasten (4) die Wasserversorgung (8) nicht abstellen kann.

## Revendications

1. Procédé de surveillance de la consommation d'eau et/ou des fuites dans une installation d'eau d'alimentation, dans lequel la conduite d'eau est pourvue d'un compteur d'eau (2) et d'une vanne d'arrêt (3), qui sont tous deux en connexion de signal avec un boîtier de commande, moyennant quoi le boîtier de commande (4) est en connexion de signal (7a) avec un ou plusieurs indicateurs d'alarme à distance (7), de sorte que, lorsque le boîtier de commande (4) est dans une phase correspondant au bâtiment dépeuplé, et qu'aucun signal (6a) n'est appliqué à partir d'une alarme incendie (6), le boîtier (4) applique un signal (3a) à la vanne (3) pour arrêter l'alimentation en eau (8),
et lorsque le boîtier de commande (4) est dans sa seconde phase, correspondant au bâtiment peuplé, et qu'un signal (5a) provenant d'un ou de plusieurs capteurs de mouvement (5) et/ou un signal (6a) provenant de l'alarme incendie (6) est appliqué, le boîtier (4) applique un signal (3a) à la vanne (3) pour ouvrir l'alimentation en eau (8) du bâtiment, **caractérisé en ce que,** dans la seconde phase, si le boîtier de commande (4), à un signal (2a) provenant du compteur d'eau (2), enregistre une fuite, il applique un signal (7a) aux indicateurs d'alarme à distance (7), et un message d'alarme est envoyé à la personne responsable ou à la personne qui surveille, ladite vanne d'arrêt (3) étant ouverte par la force, raison pour laquelle le boîtier de commande (4) ne peut pas arrêter l'alimentation en eau (8).
